# FASCICULE DE BREVET EUROPEEN

(11) **EP 1 785 632 B1**
(45) Date de publication et mention de la délivrance du brevet: **23.09.2009**
(21) Numéro de dépôt: 06123506.5
(22) Date de dépôt: 06.11.2006
(51) Int. Cl.: F04D 27/02, F04D 29/60

(54) **Dispositif de fixation pour une pompe à vide**
Befestigungsvorrichtung einer Vakuumpumpe
Fixation device for a vacuum pump

(30) Priorité: 10.11.2005 FR 0553428
(43) Date de publication de la demande: 16.05.2007
(73) Titulaire: Alcatel Lucent, 75008 Paris (FR)
(72) Inventeur: Varennes, Nicolas, 73100 Brison-St-Innocent (FR); Dauvillier, Olivier, 74150 Marcellaz-Albanais (FR)
(74) Mandataire: Sciaux, Edmond

(56) Documents cités:
- EP-A- 0 887 556
- EP-A- 1 118 774
- EP-A- 1 413 761
- WO-A-20/04020839
- US-B1- 6 485 254

## Description

La présente invention se rapporte au domaine des pompes à vides à rotation rapide, que l'on solidarise et raccorde à une structure telle qu'une canalisation ou une enceinte à vide pour générer un vide poussé. Elle concerne plus particulièrement un dispositif pour la fixation d'une telle pompe à vide

Dans l'industrie des composants électroniques ou micromécaniques, on utilise des procédés d'usinage ou de traitement par plasma qui sont exécutés dans une enceinte où l'on doit maintenir une atmosphère de vide contrôlé.

La génération du vide nécessite l'utilisation de pompes capables de générer rapidement et de maintenir un vide poussé adapté au procédé d'usinage ou de traitement. On utilise généralement des pompes de type turbomoléculaire, composées d'un corps de pompe dans lequel un rotor est entraîné en rotation rapide, par exemple une rotation à plus de trente mille tours par minute. Avec une telle vitesse de rotation élevée, le rotor acquiert une énergie cinétique très élevée.

Le corps de pompe comporte un orifice d'aspiration coaxial, que l'on raccorde à un orifice de sortie de la structure, telle que la canalisation ou l'enceinte à vide. En général, la pompe est solidarisée à la seule structure, et son support s'effectue par la seule zone entourant l'orifice d'aspiration de pompe et l'orifice correspondant de la structure. Ainsi, le corps de pompe comporte une bride annulaire coaxiale entourant l'orifice d'aspiration, des trous taraudés sont prévus sur la paroi de la structure autour de l'orifice de sortie, des trous traversants sont prévus sur la bride annulaire coaxiale du corps de pompe, et des vis à tête sont adaptées de façon que leurs tiges traversent ces trous traversants et se vissent dans des trous taraudés dans la paroi de la structure pour solidariser la pompe à vide à la structure en plaquant la bride contre la paroi de la structure.

De façon traditionnelle, les tiges des vis sont cylindriques de révolution, avec un tronçon lisse qui traverse un trou traversant de diamètre légèrement supérieur au diamètre de la tige, et avec un tronçon d'extrémité fileté qui se visse dans un trou taraudé associé.

Des normes prévoient les dimensions respectives de la bride, des vis, et des trous nécessaires, ainsi que le nombre de vis et trous, en fonction des diamètres de pompes.

Ainsi, pour une pompe turbomoléculaire de type « ATM » de la société ALCATEL, on fixe la pompe en pévoyant une bride de la norme « PNEUROP 66061 » de type « DN 250 iso-F », avec douze vis de type « M10 » dont la tige a une longueur de trente millimètres environ pour un diamètre de dix millimètres, et les trous de bride et de la structure ont un diamètre nominal de onze millimètres.

Alternativement, une bride annulaire solidaire du corps de pompe peut être reliée à l'orifice d'évacuation d'une enceinte à vide autour duquel un bride a été fixée, comme décrit dans les documents U-6,485,254, considéré comme le document décrivant l'état de la technique antérieure le plus proche et EP-1 413 761.

Une telle structure de fixation donne toute satisfaction dans les conditions normales d'utilisation, et permet ainsi de supporter les efforts mécaniques générés par le fonctionnement de la pompe à vide lors d'une utilisation normale.

Par contre, on a pu constater qu'une difficulté insurmontable peut survenir en cas de destruction accidentelle du rotor de pompe d'une rotation à pleine vitesse. En effet, dans une telle hypothèse, le rotor lancé à pleine vitesse de rotation se trouvé alors déséquilibré, peut venir frapper violemment la paroi du corps de pompe en lui imprimant une force de déplacement transversale ou radiale, et peut frotter fortement sur la paroi du corps de pompe en lui imprimant un couple de rotation coaxial. Du fait de la grande énergie accumulée dans le rotor en rotation rapide, les contraintes mécaniques appliquées par le rotor sur le corps de pompe sont très élevées, et ces contraintes sont transmises au dispositif de fixation de pompe à vide sur la structure. Il en résulte des efforts violents de cisaillement des vis de fixation, et l'on a pu constater que dans les structures actuelles ces efforts conduisent à la rupture totale des vils. La pompe se trouve alors détachée de la structure, et constitue un projectile dangereux qui peut parcourir le local d'utilisation.

Une solution a été proposée par le document WO-2004/020 839 qui décrit un dispositif de fixation de pompe à vide sur une paroi de la structure, comprenant une bride annulaire coaxiale et solidaire du corps de pompe à vide placée autour de l'orifice d'aspiration. Des trous taraudée sont prévus sur la paroi de la structure et des trous traversant sont prévus sur la bride annulaire, des vis à tête sont adaptées de façon que leurs tiges traversent les trous traversants et se vissent dans les trous taraudés associés pour solidariser la pompe à vide à la structure en plaquant la bride contre la paroi de la structure. Les trous traversants comprennent un tronçon distal cylindrique de révolution suivi d'un tronçon proximal élargi coaxial de révolution adjacent à la paroi de la structure. Lors d'efforts de cisaillement en toute direction latérale dans la zone de liaison entre la pompe à vide et la structure, cette conformation autorise une flexion de la tige de vis et un décalage latéral correspondant entre le trou traversant et le trou taraudé associé.

Cette solution permet d'absorber les efforts violents de cisaillement subis par les vis de fixation. Toutefois la vitesse de rotation du rotor est augmentée dans les nouvelles générations de pompes turbomoléculaires. En cas de crash de la pompe, l'énergie qui doit être dissipée sans être transmise à la structure devient nettement supérieure, et la résistance limite avant la rupture des vis dans cette configuration devient insuffisante. En outre cette solution ne permet pas d'éviter que la pompe se trouve détachée de la structure en cas de rupture totale des vis.

La présente invention a pour but d'éliminer les inconvénients de l'art antérieur. Pour cela l'invention propose de modifier la structure de fixation des pompes à vide qui, tout en restant compatible avec les normes en vigueur, augmente la capacité de retenue de la pompe à vide sur la structure et évite la rupture des vis de fixation et le détachement de la pompe en cas d'éclatement du rotor lancé à pleine vitesse de rotation.

A cette fin, la présente invention propose une bride annulaire pour la fixation d'une pompe à vide sur une paroi d'une structure, comportant des trous susceptibles de coopérer avec des vis à tête pour solidariser la pompe à vide à la structure en plaquant la bride contre la paroi, caractérisé en ce qu'elle comprend
- une bague supérieure et une bague inférieure coopérant de manière à pincer l'extrémité du corps de pompe entre la bague supérieure et la bague inférieure,
- au moins une cavité ménagée dans une face de la bague supérieure qui est dans un plan perpendiculaire à celui de la face de la bague supérieure destinée à être en contact avec la paroi de la structure.

L'invention a aussi pour objet un système de fixation d'une pompe à vide sur une paroi d'une structure comprenant une bride annulaire disposée coaxialement au corps de pompe autour de l'orifice d'aspiration de la pompe, et comportant des trous susceptibles de coopérer avec des vis à tête pour solidariser la pompe à vide à la structure en plaquant la bride contre la paroi, caractérisé en ce que :
- la bride annulaire comprend une bague supérieure et une bague inférieure coopérant de manière à pincer l'extrémité du corps de pompe entre la bague supérieure et la bague inférieure,
- au moins une première cavité ménagée dans une face de la bague supérieure en contact avec une face de l'extrémité du corps de pompe, et au moins une seconde cavité ménagée dans la face de l'extrémité du corps de pompe, la première cavité s'accouplant avec la seconde cavité pour former un logement, et
- au moins un plot en matériau souple inséré dans le logement.

Selon un mode de réalisation préféré, la première cavité est ménagée dans une face de la bague supérieure qui est dans un plan perpendiculaire à celui de la face de la bague supérieure en contact avec la paroi de la structure.

Selon une variante, le logement a une section circulaire dans un plan perpendiculaire à l'axe du corps de pompe.

Cette forme de logement associée à des plots cylindriques conduit à une configuration dans laquelle les plots sont sollicités en cisaillement lors d'une défaillance. Ce type de configuration présente l'avantage d'une fabrication simple et de permettre une rotation de la pompe dans la bride d'un angle de 5° maximum, que les plots peuvent accepter sans se rompre.

La taille maximale du logement et du plot doit être compatible avec les contraintes imposées par la normalisation de la bride. Le logement est prévu avec un diamètre égal ou très légèrement inférieur à celui du plot de manière à permettre d'introduire les plots sous une faible compression radiale en jouant sur l'élasticité du matériau ; ainsi les plots ne peuvent pas sortir de leur logement. A titre d'exemple, le système de fixation selon l'invention peut comporter des logements ayant un diamètre de 10±0,1 mm et des plots de diamètre 10 ± 0,5mm pour une hauteur de 14 ± 0,5mm, ce qui conduit à une compression maximum du plot de 0,6mm.

Selon une autre variante, le logement a une section oblongue, i.e. plus longue que large, dans un plan perpendiculaire à l'axe du corps de pompe.

Avantageusement le logement délimité par l'accouplement de la cavité portée par la bride et celle placée à l'extrémité du corps de pompe est de forme oblongue, afin d'augmenter le volume des plots dans le but d'améliorer leur capacité d'amortissement, tout en respectant les contraintes géométriques de la norme.

Selon un mode de réalisation particulier de l'invention, les cavités formant le logement par accouplement sont de forme arrondie avec des rayons de courbure différents pour chacune des cavités. De préférence l'une des cavités formant le logement a une forme arrondie épousant celle du plot et des angles adoucit afin d'éviter la dégradation du plot par contact avec des arêtes vives. L'autre cavité a un rayon de courbure beaucoup plus large permettant un travail en compression, moins contraignant pour le plot. Ce type de configuration permet une rotation de 30° du corps de pompe par compression des plots dans le logement en évitant leur rupture.

La destruction du rotor entraînant en rotation le corps de pompe génère des contraintes de compression sur la longueur du plot qui sont absorbées grâce aux propriétés de déformation élastique du matériau constitutif du plot.

Selon l'invention, le plot est constitué d'un matériau souple et de préférence un élastomère. La nature du matériau constituant les plots, de part sa raideur et sa qualité d'amortissement, va autoriser un léger déplacement de la bride par rapport à l'extrémité du corps de pompe sans briser le plot. L'élastomère est choisi de préférence parmi les polysiloxanes, les polychloroprènes et leurs copolymères, les homopolymères et les copolymères de l'isoprène, les homopolymères et les copolymères de l'isobutylène, et notamment un copolymère d'isobutylène et d'isoprène.

Pour une configuration travaillant en cisaillement, on préférera un polychloroprène 70 shore. Pour une configuration travaillant en compression, on préférera un copolymère d'isobutylène et d'isoprène 70 shore.

Dans le cas extrême où la rupture du plot se produirait, la sécurité de l'installation resterait néanmoins assurée, car le corps de pompe pris en sandwich tournera entre la bague supérieure et la bague inférieure sans risquer de casser les vis de retenues.

L'invention a encore pour objet un procédé de fixation d'une pompe à vide sur une paroi d'une structure au moyen d'un système de fixation comprenant une bride annulaire disposée coaxialement au corps de pompe autour de l'orifice d'aspiration de la pompe, et comportant des trous susceptibles de coopérer avec des vis à tête pour solidariser la pompe à vide à la structure en plaquant la bride contre la paroi. Selon l'invention, la bride annulaire comporte une bague supérieure et une bague inférieure composée de deux demi-bagues. Le procédé comprend les étapes suivantes :
- on place la bague supérieure autour de l'extrémité du corps de pompe en l'insérant par le dessus, la bague supérieure comportant au moins une première cavité ménagée dans sa face en contact avec une face de l'extrémité du corps de pompe et s'accouplant avec une seconde cavité ménagée dans la face de l'extrémité du corps de pompe pour former un logement,
- on insère par en dessous un plot dans le logement,
- on dispose chaque demi-bague composant une bague inférieure autour de l'extrémité du corps de pompe en dessous de la bague supérieure,
- on assemble par des vis la bague supérieure et la bague inférieure,
- on fixe au moyen de vis l'ensemble composé de la bride enserrant le corps de pompe à la paroi de la structure.

D'autres caractéristiques et avantages de la présente invention apparaîtront à la lecture de la description qui suit d'un mode de réalisation, donné bien entendu à titre illustratif et non limitatif, et dans le dessin annexé sur lequel
- la figure 1 est une vue schématique illustrant, en coupe longitudinale, une structure de pompe turbomoléculaire selon la présente invention et sa fixation sur une structure telle qu'une enceinte à vide ;
- la figure 2 est une vue de dessous de la bague supérieure selon l'invention,
- la figure 3 est une vue de dessus de la bague inférieure selon l'invention,
- la figure 4 est une vue en perspective éclatée du dispositif de fixation selon l'invention,
- la figure 5 est une vue en coupe du système de fixation selon l'invention dans le plan des vis de fixation sur la structure,
- la figure 6 est une vue en coupe du système de fixation selon l'invention dans le plan des plots,
- les figures 7a, 7c et 7c montrent des variantes de réalisation d'un logement et du plot associé.

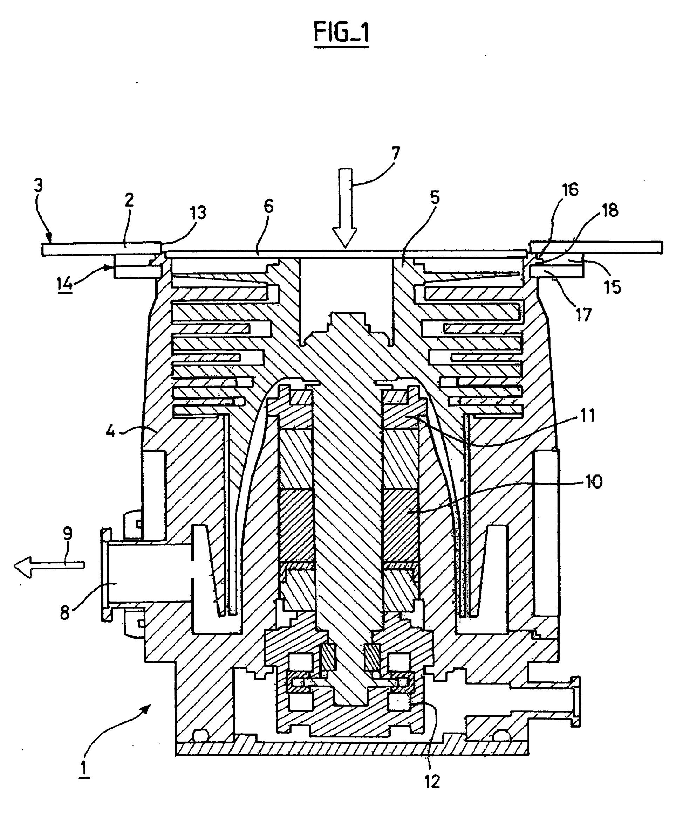

On considère tout d'abord la figure 1, illustrant une structure de pompe à vide **1** de type turbomoléculaire, solidarisée à une paroi **2** associée à une structure **3**, telle qu'une enceinte à vide par exemple.

La pompe à vide **1** comprend un corps de pompe **4** dans lequel tourne à grande vitesse un rotor **5** en rotation axiale selon l'axe I-I du corps de pompe **4.** Le corps de pompe **4** comporte un orifice d'aspiration **6** coaxial au corps de pompe **4** par lequel pénètrent les gaz pompés **7,** et un orifice de rejet **8** par lequel sont évacués les gaz refoulés **9**. Le rotor **5** est entraîné en rotation dans le corps de pompe **4** par un moteur interne **10** et il est guidé latéralement par des paliers magnétiques ou mécaniques **11** et **12**.

La paroi **2** associée à la structure **3** comprend un orifice de sortie **13** des gaz à pomper en correspondance avec l'orifice d'aspiration **6** de la pompe à **vide 1.** La structure **3** délimite une enceinte fermée isolée de l'extérieur dans laquelle la pompe à vide **1** peut créer un vide contrôlé. La paroi **2** peut être l'enveloppe de la structure ou un moyen de fixation lié à la structure, comme par exemple une bride, associée à une structure telle qu'une canalisation ou une enceinte à vide, permettant d'accueillir la bride de fixation de la pompe.

Selon la présente invention, une bride annulaire **14** en acier inoxydable, comportant une bague supérieure **15** munie d'un épaulement **16** et une bague inférieure **17,** est mise en place sur le corps **4** de la pompe à vide **1,** autour de l'extrémité **18** du corps de pompe **4** coaxiale à l'orifice d'aspiration **6,** afin de permettre la fixation de la pompe à vide **1** à la paroi **2** de la structure **3.** L'épaulement **16** permet le positionnement axial de la bague supérieure **15** sur le corps de pompe **4.**

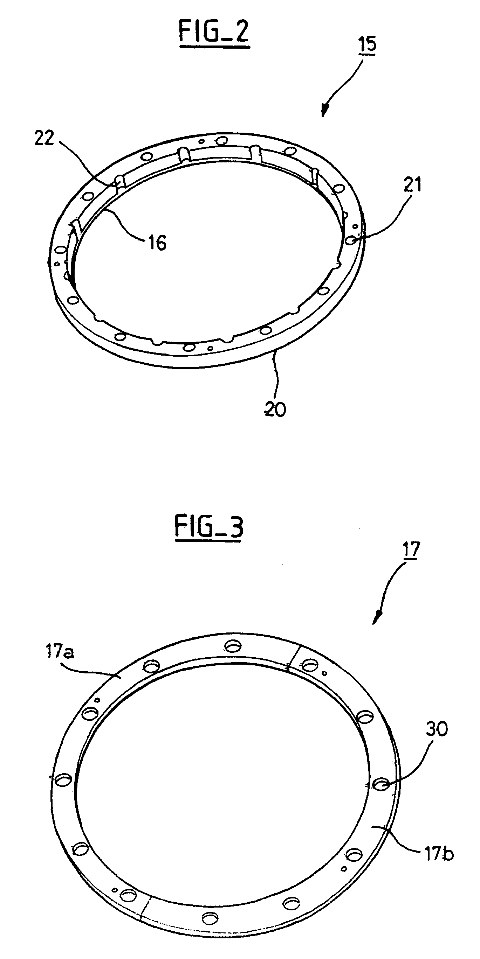

La figure 2 est une vue en perspective de la bague supérieure **15** selon la présente invention. La bague supérieure **15** est destinée à être accolée à la paroi **2** d'une **structure 3** par sa face de contact **20.** La bague **15** est de forme annulaire et comporte un épaulement **16** destiné à faciliter sa mise en place sur l'extrémité **18** du corps de pompe **4.** Dans le mode de réalisation représenté sur la figure 2, la bague **15** est perforée de douze trous traversants **21** disposés à intervalle régulier, conformément à la norme « PNEUROP 66061 » actuellement en vigueur. Selon un mode de réalisation particulier les trous traversants sont du type décrit dans le document WO-2004/020 839 et comprennent un tronçon distal cylindrique de révolution suivi d'un tronçon proximal élargi coaxial de révolution adjacent à la paroi de la structure. En pratique, on peut avantageusement prévoir que le tronçon proximal de trou traversant comporte une portion proximale cylindrique de révolution se raccordant au tronçon distal de trou traversant par une portion distale tronconique de révolution.

La bague supérieure **15** comprend également douze cavités **22** régulièrement répartis sur sa paroi annulaire interne **23,** en contact avec l'extrémité **18** du corps de pompe, qui sont intercalés entre chaque paire de trous traversants **21.**

La figure 3 montre en perspective la bague inférieure **17** qui est également perforée de douze trous traversants **30** correspondants aux trous traversants **21** de la bague supérieure **15.** Pour permettre de positionner la bague inférieure **17** autour de l'extrémité **18** du corps de pompe **4,** celle-ci est composée en deux demi-bagues **17a** et **17b.**

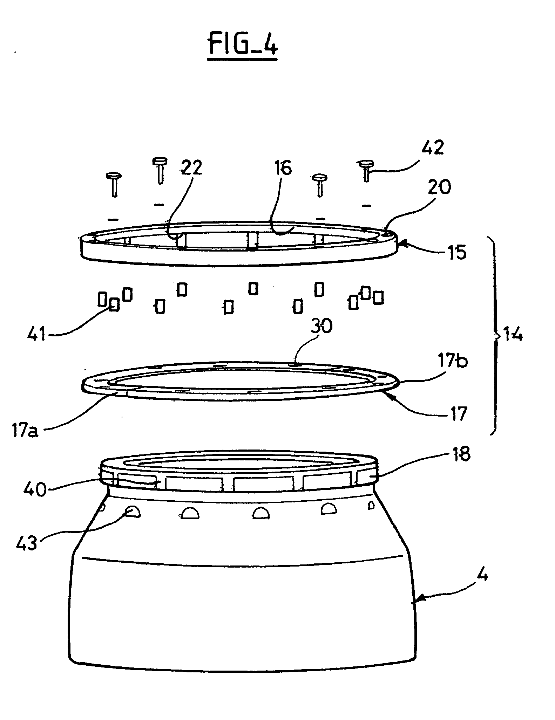

Sur la vue en perspective éclatée de la figure 4 on retrouve la bague supérieure **15,** la bague inférieure **17** et l'extrémité **18** du corps de pompe **4.** L'extrémité **18** du corps de pompe **4** porte des cavités **40** qui s'accouplent respectivement avec les cavités **22** de la bague supérieure **15** pour former un logement **40-22** destiné à accueillir un plot **41.**
L'assemblage de ces trois éléments est réalisé de la manière suivante.
(a) On place la bague supérieure **15** autour de l'extrémité supérieure **18** du corps **4** de la pompe turbomoléculaire **1** en l'insérant par le haut. L'épaulement **16** prévu dans la bague annulaire supérieure **15** permet d'ajuster son positionnement axial sur le corps de pompe **4.**
(b) On insère par en dessous des plots **41** dans leurs logements **40-22.**
(c) On monte la bague inférieure **17** en disposant chaque demi-bague **17a** et **17b** autour de l'extrémité **18** de la pompe turbomoléculaire, en dessous de la bague supérieure 15. La bague supérieure **15** et les deux demi-bagues inférieures **17a** et **17b** sont assemblées par des vis **42** pour constituer la bride annulaire **14.** Des encoches **43** sont prévues dans le corps de pompe **4** pour faciliter le passage des vis **42.** De cette manière, il est possible de transporter la pompe turbomoléculaire pour la solidariser à la structure ou châssis **3** sans avoir besoin de retenir manuellement la bague supérieure **15.**
(d) On fixe l'ensemble pompe turbomoléculaire **4** et bride annulaire **14** au châssis **3** par des vis à tête **44** en utilisant les trous lisses **21** et **30** traversant respectivement les bagues **15** et **17.**

Lors d'une destruction du rotor **5** lancé à pleine vitesse de rotation, l'énergie cinétique accumulée dans le rotor **5** est transmise au corps de pompe **4,** qui tend à se déplacer en rotation. L'invention vise à absorber cette énergie grâce aux propriétés de déformation élastique du matériau des plots. On comprend que le corps de pompe **4** peut se déplacer en rotation jusqu'à ce que le plot **41** vienne buter contre la paroi latérale du volume formé par les cavités **22** et **40** accouplés. La nature des plots en élastomère, de part sa raideur et sa qualité d'amortissement, va autoriser un léger déplacement de la bride annulaire **14** par rapport à l'extrémité **18** du corps de pompe **4** sans briser le plot **41.** L'énergie est dissipée par l'écrasement du plot **41.** Ainsi la structure du système garantit que les vis **44** resteront malgré tout en place car les contraintes de cisaillement qui leur sont imposées ont été fortement diminuées.

De plus, si un des plots **41** ne parvient pas à absorber suffisamment d'énergie pour éviter la rupture, les débris du plot **41** vont s'infiltrer dans le sens de la rotation entre la bride annulaire **14** et l'extrémité **18** du corps de pompe **4,** ce qui aura pour effet de continuer à freiner la rotation du corps de pompe **4,** lui évitant de tourner librement dans la bride **14.**

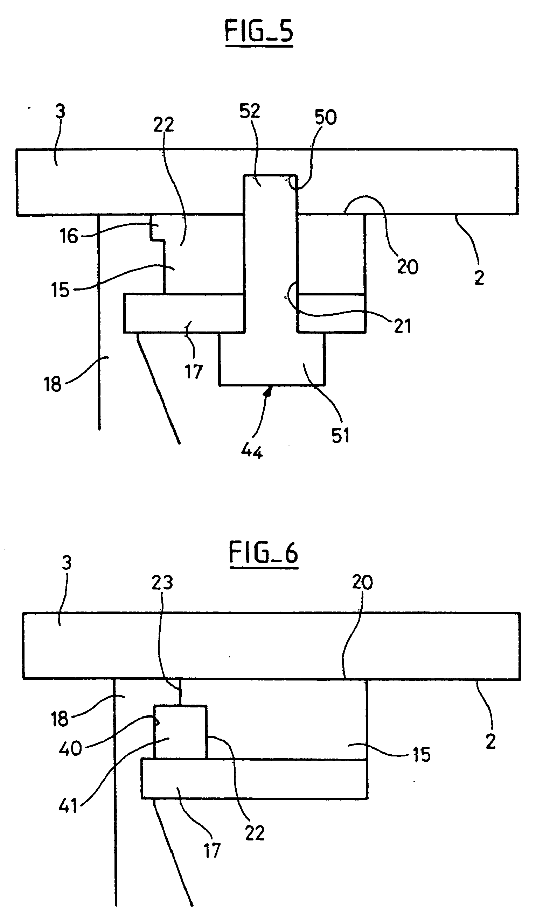

La figure 5 illustre en coupe le système de fixation selon la présente invention dans le plan des vis **44** de fixation sur la structure. Conformément aux normes en vigueur, des trous taraudés **50** sont prévus dans la paroi **2** de la structure **3** répartis autour de l'orifice de sortie **13.** Des trous traversants lisses **21** associés sont prévus sur la bague supérieure **15** dans lesquels des vis **44** à tête **51** sont adaptées de façon à ce que leurs tiges **52** traversent les trous **21** et se vissent dans les trous taraudés **50** associés pour solidariser la pompe à vide **1** à la structure **3** en plaquant la face **20** de la bride **14** contre la paroi **2** de la structure **3.**

Une vue en coupe dans le plan des plots **41** du système de fixation selon l'invention, parallèlement à celle de la figure 5, est montrée sur la figure 6. Selon l'invention, la face **23** annulaire interne de la bague supérieure **15** porte des cavités **22.** L'extrémité **18** du corps de **pompe 4** comprend également des cavités **40.** Les cavités **22** et **40** coopèrent deux à deux pour former un logement **40-22** dans lequel est inséré un plot **41** constitué d'un matériau souple. Ce matériau est de préférence un élastomère comme un polysiloxane, un polychloroprène ou un copolymère du chloroprène, l'isoprène ou un copolymère de l'isoprène, ou bien encore l'isobutylène ou un copolymère de l'isobutylène. Dans le cas présent le matériau utilisé est un copolymère de l'isoprène et de l'isobutylène.

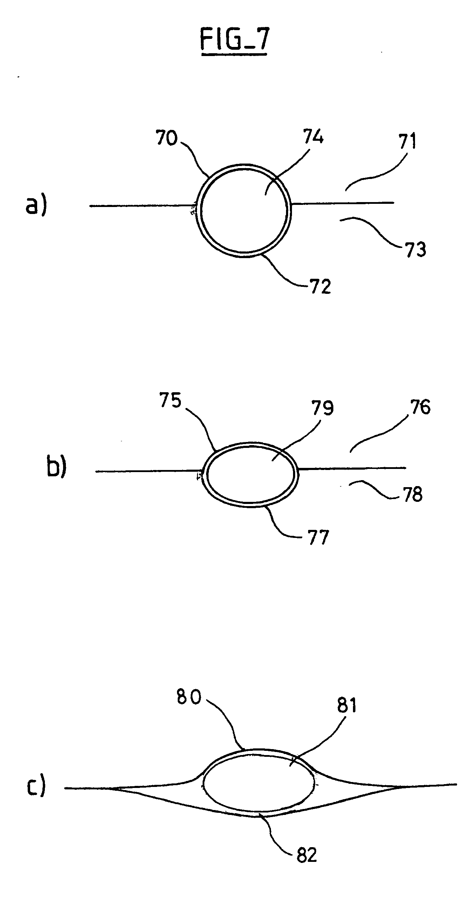

Selon une variante de réalisation de l'invention, la figure 7a représente un montage en cisaillement d'un plot cylindrique. Le volume du logement, délimité par la cavité **70** de la bague supérieure **71** et la cavité **72** de l'extrémité **73** du corps de pompe, a une section circulaire dans un plan perpendiculaire à l'axe du corps de pompe. Le volume du logement est prévu pour permettre une compression du plot **74** dans son logement.

Selon une autre variante de réalisation, la figure **7b** représente un montage en cisaillement d'un plot oblong. Le volume limité par les cavités **75** de la bague supérieure **76** et la cavité **77** de l'extrémité **78** du corps de pompe ainsi que le plot **79** peuvent avantageusement être de forme oblongue, c'est à dire de longueur supérieure à la largeur. Ce mode de réalisation permet d'augmenter le volume du plot **79,** donc la quantité de polymère, dans le but d'améliorer les capacités d'amortissement du plot **79,** tout en respectant les contraintes géométriques de la norme.

Selon encore une autre variante de réalisation, la figure 7c représente un montage en compression d'un plot cylindrique. La partie supérieure du logement **80** a une dimension très proche de celle du plot **81** et est adoucit aux angles pour éviter de cisailler le **plot 81** par des arêtes vives. La partie inférieure **82** a un rayon de courbure beaucoup plus large pour un travail en compression plus doux. Avec ce type de montage, lors d'une défaillance, les plots cylindriques **81** sont sollicités en compression.

L'invention n'est pas limitée aux modes de réalisation décrits mais est susceptible de nombreuses variantes aisément accessibles à l'homme de l'art. Naturellement l'invention s'applique non seulement aux pompes à vide fixées par un système conforme à la norme « PNEUROP 66061 » à douze vis, mais également à des pompes à vide de tailles différentes fixées par des systèmes normalisés différents et adaptés à leur taille.

## Revendications

1. Bride annulaire (14) pour la fixation d'une pompe à vide (1) sur une paroi (2) d'une structure (3), compostant des trous (21, 30) susceptibles de coopérer avec des vis à tête (44) pour solidariser la pompe à vide (1) à la structure (3) en plaquant la bride (14) contre la paroi (2), **caractérisé en ce qu'**elle comprend
- une bague supérieure (15) et une bague inférieure (17) coopérant de manière à pincer l'extrémité (18) du corps de pompe (4) entre la bague supérieure (15) et la bague inférieure (17),
- au moins une cavité (22) ménagée, dans la face interne (23) de la bague supérieure (15) qui est dans un plan perpendiculaire à celui de la face (20) de la bague supérieure (15) destinée à être en contact avec la paroi (2) de ta structure (3).

2. Système de fixation d'une pompe à vide (1) sur une paroi (2) d'une structure (3), comprenant une bride annulaire (14) selon la revendication 1, disposée coaxialement au corps de pompe (4) autour de l'orifice d'aspiration (6) de la pompe (1), et comportent des trous (21, 30) susceptibles de coopérer avec des vis à tête (44) pour solidariser la pompe à vide (1) à la structure (3) en plaquant la bride (14) contre la paroi (2), **caractérisé en ce que** :
- la bride annulaire (14) comprend une bague supérieure (15) et une bague inférieure (17) coopérant de manière et pincer l'extrémité (13) du corps, de pompe (4) entre la bague supérieure (15) et la bague inférieure (17),
- au moins une première cavité (22) ménagée dans une face (23) de la bague supérieure (15) en contact avec une face de l'extrémité (18) du corps de pompe (4), et au moins une seconde, cavité (40) ménagée dans la face de l'extrémité (18) du corps de pompe (4), la première cavité (22) s'accouplant avec la seconde cavité (40) pour former un logement (40-22), et
- au moins un plot (41) en matériau souple inséré dans le logement (40-22).

3. Système de fixation selon la revendication 2, dans lequel la première cavité (22) est ménagée dans une face (23) de la bague supérieure (15) qui est dans un plan perpendiculaire à celui de la face (20) de la bague supérieure (15) destiné à être en contact avec la paroi (2) de la structure (3).

4. Système de fixation selon l'une des revendications 2 et 3, dans lequel le logement (40-22) a une section circulaire dans un plan perpendiculaire a l'axe du corps de pompe (4).

5. Système de fixation selon des revendications 2 et 3, dans lequel le logement (40-22) a une section oblongue dans un plan perpendiculaire à l'axe du corps de pompe (4).

6. Système de fixation selon l'une des revendications 2 et 3,dans lequel les cavités (22, 40) formant le logement (40-22) par accouplement sont de forme arrondie avec des rayons de courbure différents pour chacune des cavités (22, 40).

7. Système de fixation selon l'une des revendications précédentes, dans lequel le plot (41) est constitué d'un élastomère.

8. Système de fixation selon la revendication 7, dans lequel l'élastomère est choisi parmi les polysiloxanes, les polychloroprènes et leurs copolymères, les homopolymères et les copolymères de l'isoprène, et les homopolymères et les copolymères de l'isobutylène.

9. Procédé de fixation d'une pompe à vide (1) sur une paroi (2) d'une structure (3) au moyen d'un système de fixation comprenant une bride annulaire (14) disposée coaxialement du corps de pompe (4) autour de l'orifice d'aspiration (6) de la pompe (4), et comportant des trous (21, 30) susceptibles de coopérer avec des vis à tête (44) pour solidariser la pompe à vide (1) à la structure (3) en plaquant la bride bride (14) contre la paroi (2), **caractérisé en ce que** la bride annulaire (14) comporte une bague supérieure (15) et une bague inférieure (17) composée de deux demi-bagues (17a, 17b), et **en ce que** le procédé comprend les étapes suivantes:
- on place la bague supérieure (15) autour de l'extrémité (18) du corps dé: pompe (4) en l'insérant par le dessus, la bague supérieure (15) comportant au moins une première cavité (22) ménagée dans sa face (23) en contact avec une face de l'extrémité (18) du corps de pompe (4) et s'accouplant avec une seconde cavité (40) ménagée dans la face de l'extrémité (18) du corps de pompe (4) pour former un logement (40-22),
- on insère par en dessous un plot (41) dans le logement (40-22),
- on dispose chaque demi-bague (17a, 17b) composant une bague inférieure (17) autour de l'extrémité (18) du corps de pompe (4) en dessous de la bague supérieure (15),
- on assemble par des vis (42) la bague supérieure (15) et la bague inférieure (17),
- on fixe, au moyen de vis à tête (44), l'ensemble composé de la bride (14) enserrant le corps de pompe (4) à la paroi (2) de la structure (3).

## Claims

1. Annular flange (14) for mounting a vacuum pump (1) on a wall (2) of a structure (3), comprising holes (21, 30) able to combine with headed screws (44) to secure the vacuum pump (1) to the structure (3) by pinning the flange (14) against the wall (2), **characterised in that** it comprises:
- an upper ring (15) and a lower ring (17) which combine to pinch the end (18) of the pump body (4) between the upper ring (15) and the lower ring (17).
- at least one cavity (22) on the inner face (23) of the upper ring (15) which is perpendicular to the face (20) of the upper ring (15) intended to be in contact with the wall (2) of the structure (3).

2. System for mounting a vacuum pump (1) on a wall (2) of a structure (3) comprising an annular flange (14) according to claim 1, arranged coaxially to the pump body (4) around the suction orifice (6) of the pump (1), and comprising holes (21, 30) able to combine with headed screws (44) to secure the vacuum pump (1) to the structure (3) by pinning the flange (14) against the wall (2), **characterised in that**:
- the annular flange (14) comprises an upper ring (15) and a lower ring (17) which combine to pinch the end (18) of the pump body (4) between the upper ring (15) and the lower ring (17),
- at least one first cavity (22) on a face (23) of the upper ring (15) in contact with a face of the end (18) of the pump body (4), and at least one second cavity (40) on the face of the end (18) of the pump body (4), with the first cavity (22) coupling to the second cavity (40) to form a housing (40-22), and
- at least one stud (41) made of flexible material inserted in the housing (40-22).

3. Mounting system according to claim 2, in which the first cavity (22) is on a face (23) of the upper ring (15) which is perpendicular to the face (20) of the upper ring (15) intended to be in contact with the wall (2) of the structure (3).

4. Mounting system according to one of claims 2 and 3, in which the housing (40-22) has a circular cross-section perpendicular to the axis of the pump body (4).

5. Mounting system according to one of claims 2 and 3, in which the housing (40-22) has an oblong cross-section perpendicular to the axis of the pump body (4).

6. Mounting system according to one of claims 2 and 3, in which the cavities (22, 40) forming the housing (40-22) by coupling are founded with varying radiuses of curvature for each of the cavities (22, 40).

7. Mounting system according to one of the previous, claims, in which the stud (41) consists of an elastomer.

8. Mounting system according to claim 7, in which the elastomer is chosen from among polysiloxanes, polychloroprenes and their copolymers, the homopolymers and copolymers of isoprene, and the homopolymers and copolymers of isobutylene.

9. Method of mounting a vacuum pump (1) on a wall (2) ore structure (3) using a mounting system comprising an annular flange (14) arranged coaxially to the pump body (4) around the suction orifice (6) of the pump (4), and comprising holes (21, 30) able to combine with headed screws (44) to secure the vacuum pump (1) to the structure (3) by pinning the flange (14) against the wall (2), **characterised in that** the annular flange (14) comprises an upper ring (15) and a lower ring (17) comprising two half-rings (17a, 17b), and **in that** the method comprises the following stages:
- the upper ring (15) is placed around the end (18) of the pump body (4), inserting it from above, with the upper ring (15) comprising at least a first cavity (22) on its face (23) in contact with a face of the end (18) of the pump body (4) and coupling to a second cavity (40) on the face of the end (18) of the pump body (4) to form a housing (40-22),
- a stud (41) is inserted into the housing (40-22) from below,
- each half-ring (17a, 17b) making up a lower ring (17) is placed around the end (18) of the pump body (4) below the upper ring (15),
- the upper ring (15) and the lower ring (17) are assembled using screws (42),
- headed screws (44) are used to mount the assembly comprising the flange (14) holding the pump body (4) on the wall (2) of the structure (3).

## Patentansprüche

1. Ringflansch (14) für die Befestigung einer Vakuumpumpe (1) an einer Wand (2) einer Struktur (3), ausgestattet mit Löchern (21, 30), welche fähig sind, mit Kopfschrauben (44) zusammenzuwirken, um die Vakuumpumpe (1) fest mit der Struktur (3) zu verbinden, indem der Flansch (14) gegen die Wand (2) gepresst Wird, **dadurch gekennzeichnet, dass** er umfasst:
- einen oberen Ring (15) und einen unteren Ring (17), welche zusammenwirken, um das Ende (18) des Pumpengehäuses (4) zwischen dem oberen Ring (15) und dem unteren Ring (17) einzuklemmen,
- mindestens eine Aussparung (22) an der Innenseite (23) des oberen Rings (15), deren Ebene senkrecht zur Ebene der Seite (20) des oberen Rings (15), welche für den Kontakt mit der Wand (2) der Struktur (3) bestimmt ist, steht, angeordnet ist.

2. System für die Befestigung eine Vakuumpumpe (1) an einer Wand (2) einer Struktur (3), umfassend einen Ringflansch (14) nach Anspruch 1, welcher koaxial zum Pumpengehäuse (4) um die Ansaugöffnung (6) der Pumpe (1) angeordnet und mit Löchern (21, 30) versehen ist, welche fähig sind, mit Kopfschrauben (44) zusammenzuwirken, um die Vakuumpumpe (1) durch Pressen des Flansches (14) gegen die Wand (2) fest mit der Struktur (3) zu verbinden, **dadurch gekennzeichnet, dass**:
- Der Ringflansch (14) umfasst: einen oberen Ring (15) und einen unteren Ring (17), welche zusammenwirken, um das Ende (18) des Pumpengehäuses (4) zwischen dem oberen Ring (15) und dem unteren Ring (17) einzuklemmen,
- mindestens eine erste Aussparung (22) in einer Seite (23) des oberen Rings (15), welche mit einer Seite des Endes (18) des Pumpengehäuses (4) in Kontakt steht, und mindestens eine zweite Aussparung (40), welche in der Seite des Endes (18) des Pumpengehäuses (4) eingelassen ist, wobei sich die erste Aussparung (22) und die zweite Aussparung (40) zusammenfügen, um eine Aufnahme (40-22) zu bilden, und
- mindestens einen Zapfen (41) aus elastischem Material, welcher in die Aufnahme (40-22) eingeschoben wird.

3. Befestigungssystem nach Anspruch 2, wobei die erste Aussparung (22) in einer Seite (23) des oberen Rings (15), deren Ebene senkrecht zur Ebene der Seite (20) des oberen Rings (15), welche für den kontakt mit der Wand (2) der Struktur (3) bestimmt ist, steht angeordnet ist .

4. Befestigungssystem nach einem der Ansprüche 2 und 3, wobei die Aufnahme (40-22) einen kreisförmigen Querschnitt in einer Ebene senkrecht zur Achse des Pumpengehäuses (4) aufweist.

5. Befestigungssystem nach einem der Ansprüche 2 und 3, wobei die Aufnahme (40-22) einen länglichen Querschnitt in einer Ebene senkrecht zur Achse des Pumpengehäuses (4) aufweist.

6. Befestigungssystem nach einem der Ansprüche 2 und 3, wobei die Aussparungen (22, 40), welche durch das Zusammenfügen eine Aufnahme (40-22) bilden, eine abgerundete Form mit einem für jede Aussparung (22, 40) unterschiedlichen Krümmungsradius aufweisen.

7. Befestigungssystem nach einem der vorstehenden Ansprüche, wobei der Zapfen (41) aus einem Elastomer besteht.

8. Befestigungssystem nach Anspruch 7, wobei das Elastomer unter den Polysiloxanen, den Polychloroprenen und deren Copolymeren, den Homopolymeren und den Copolymeren des Isoprens, und den Homopolymeren und den Copolymeren des Isobutylens gewählt wird.

9. Verfahren zur Befestigung eine Vakuumpumpe (1) an einer Wand (2) einer Struktur (3) anhand eines Befestigungssystems mit einem Ringflansch (14), welcher koaxial zum Pumpengehäuse (4) um die Ansaugöffnung (6) der Pumpe (4) angeordnet und mit Löchern (21, 30) versehen ist, welche fähig sind, mit Kopfschrauben (44) zusammenzuwirken, um die Vakuumpumpe cd durch Pressen des Flansches (14) gegen die Wand (2) fest mit der Structure (3) zu verbinden, **dadurch gekennzeichnet, dass** der Ringflansch (14) einen oberen Ring (15) und einen unteren Ring (17), welcher aus zwei Halbringe (17a, 17b) gebildet wird, umfasst, und dass das Verfahren die folgenden Schritte umfasst:
- Man legt den oberen Rings (15) von oben um das Ende (18) des Pumpengehäuses (4), wobei der obere Ring (15) mindestens eine erste Aussparung (22) aufweist, welche in dessen Seite (23), die mit einer Seite des Endes (18) des Pumpengehäuses (4) in Kontakt steht, eingelassen ist und mit einer zweiten Aussparung (40) in der Seite des Endes (18) des Pumpengehäuses (4) zusammengefügt wird, um eine Aufnahme (40-22) zu bilden,
- man schiebt einen Zapfen (41) von unten in die Aufnahme (40-22) ein,
- man legt beide Halbringe (17a,17b), welche einen unteren Rings (17) bilden, um das Ende (18) des Pumpengehäuses (4) unter dem oberen Ring (15),
- man fügt den oberen Ring (15) und den unteren Ring (17) anhand von Schrauben (42) zusammen,
- man befestigt die aus dem das Pumpengehäuse (4) umschließenden Flansch (14) bestehende Einheit anhand von Kopfschrauben (44) an der Wand (2) der Struktur (3).
